(19) Europäisches Patentamt / European Patent Office / Office européen des brevets

(11) **EP 4 341 650 B1**

(12) **EUROPÄISCHE PATENTSCHRIFT**

(45) Veröffentlichungstag und Bekanntmachung des Hinweises auf die Patenterteilung:
**25.12.2024 Patentblatt 2024/52**

(21) Anmeldenummer: **22724017.3**

(22) Anmeldetag: **20.04.2022**

(51) Internationale Patentklassifikation (IPC):
**G01F 1/84** *(2006.01)* **G01F 25/10** *(2022.01)*
**G01N 9/00** *(2006.01)*

(52) Gemeinsame Patentklassifikation (CPC):
**G01F 1/84; G01F 25/10; G01N 9/002;**
G01N 2009/006

(86) Internationale Anmeldenummer:
**PCT/EP2022/060402**

(87) Internationale Veröffentlichungsnummer:
**WO 2022/242976 (24.11.2022 Gazette 2022/47)**

(54) **CORIOLIS-MASSEDURCHFLUSSMESSGERÄT UND VERFAHREN ZUM ÜBERWACHEN EINES CORIOLIS-MASSEDURCHFLUSSMESSGERÄTES**

CORIOLIS MASS FLOW METER AND METHOD OF MONITORING A CORIOLIS MASS FLOW METER

DÉBITMETRE MASSIQUE CORIOLIS ET PROCÉDÉ DE SURVEILLANCE D'UN DÉBITMETRE MASSIQUE CORIOLIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.05.2021 DE 102021113363**

(43) Veröffentlichungstag der Anmeldung:
**27.03.2024 Patentblatt 2024/13**

(73) Patentinhaber: **Endress+Hauser Flowtec AG**
**4153 Reinach (CH)**

(72) Erfinder:
• **RIEDER, Alfred**
**84032 Landshut (DE)**
• **SCHERRER, Rémy**
**68960 Oberdorf (FR)**
• **POHL, Johan**
**79110 Freiburg (DE)**

(74) Vertreter: **Hahn, Christian**
**Endress+Hauser Group Services**
**(Deutschland)AG +Co. KG**
**Colmarer Straße 6**
**79576 Weil am Rhein (DE)**

(56) Entgegenhaltungen:
WO-A1-2021/047887 DE-A1- 102009 002 941
DE-A1- 102010 044 179

**Beschreibung**

Die vorliegende Erfindung betrifft ein Coriolis-Massedurchflussmessgerät und ein Verfahren zu dessen Überwachung. Das europäische Patent EP 2 638 367 B1 betrifft ein solches Verfahren, bei dem eine Messrohrschwingung in einer Biegeschwingungsmode eines Messrohrs außerhalb der Resonanz mit einer Anregungsfrequenz angeregt wird, die ein festes Verhältnis zur Eigenfrequenz der Biegeschwingungsmode aufweist, um einen Wert einer Transferfunktion zu ermitteln, der aus einem Verhältnis einer Sensorsignalamplitude eines Schwingungssensors zum Erfassen der Messrohrschwingung und einer Erregersignalamplitude eines Erregers zum Anregen der Messrohrschwingung gebildet wird. Auch die WO 2021/047887 A1 betrifft ein solches Verfahren.

Anhand von Veränderungen des Werts dieser Transferfunktion können Veränderungen des Massedurchflussmessgeräts frühzeitig festgestellt werden, insbesondere eine Veränderung der elastischen Eigenschaften des Messrohrs, die durch Abrasion oder Korrosion verursacht sein können. Die Anregung außerhalb der Resonanz ist einerseits vorteilhaft, da die Transferfunktion damit im Wesentlichen unabhängig von der Güte des schwingenden Messrohrs ist, die um mehrere Größenordnungen variieren kann. Andererseits nimmt mangels Resonanzüberhöhung der angeregten Biegeschwingungsmode die relative Bedeutung des Beitrags benachbarter Biegeschwingungsmoden zum Sensorsignal zu, so dass dieser nicht vernachlässigt werden sollte. Hierbei ist zudem zu beachten, dass die relative Bedeutung des Beitrags benachbarter Biegeschwingungsmoden veränderlich ist, und insbesondere eine Dichteabhängigkeit aufweist. Es ist daher die Aufgabe der vorliegenden Erfindung ein verbessertes Überwachungsverfahren und ein Coriolis-Massedurchflussmessgerät mit dem implementierten Überwachungsverfahren bereitzustellen, das den obigen Erwägungen Rechnung trägt. Die Aufgabe wird erfindungsgemäß gelöst durch das Verfahren gemäß dem unabhängigen Patentanspruch 1 und das Coriolis-Massedurchflussmessgerät gemäß dem unabhängigen Patentanspruch 11.

Das erfindungsgemäße Verfahren zum Überwachen eines Coriolis-Massedurchflussmessgerätes mit mindestens einem schwingfähigen Messrohr zum Führen eines Mediums umfasst: Ermitteln der Resonanzfrequenz einer Biegeschwingungsnutzmode; Ermitteln eines Dichtemesswerts eines in dem Messrohr geführten Mediums in Abhängigkeit von der Resonanzfrequenz; Anregen einer Biegeschwingung außer Resonanz mit einem Erregersignal, welches eine Erregersignalamplitude und eine Anregungsfrequenz aufweist, welche das $\mu$-Fache der Resonanzfrequenz der Biegeschwingungsnutzmode beträgt, wobei $\mu$ ein konstanter Faktor ist, wobei gilt $1{,}05 < \mu < 1{,}5$; Erfassen eines Sensorsignals und Ermitteln einer Sensorsignalamplitude der Biegeschwingung außerhalb der Resonanz; Ermitteln eines Werts einer Integritätsfunktion des Messrohrs, welche von einem Verhältnis der Sensorsignalamplitude zur Erregersignalamplitude der Biegeschwingung abhängt, wobei die Integritätsfunktion weiterhin von einem dichteabhängigen Term einer Transferfunktion abhängt, wobei der dichteabhängige Term der Transferfunktion Beiträge mehrerer Schwingungsmoden zum Sensorsignal modelliert, wobei die Integritätsfunktion mittels des dichteabhängigen Terms der Transferfunktion auf Referenzbedingungen zurückgeführt wird, und/oder einen Integritätswert angibt, der keine Querempfindlichkeiten zur Mediendichte aufweist.

Allgemein modelliert eine Transferfunktion $T(\omega)$ ein von einer Erregerkreisfrequenz $\omega = 2\pi f$ abhängiges Verhältnis $U(\omega) / I(\omega)$, wobei $f$ die Erregerfrequenz ist und $U(\omega)$ sowie $I(\omega)$ eine Sensorspannungssignalamplitude bzw. eine Erregerstromsignalamplitude bei der Erregerkreisfrequenz $\omega$ bezeichnen. Insbesondere bei einem elektrodynamischen Sensor, ist die Sensorspannungssignalamplitude $U(\omega)$ geschwindigkeitsproportional, also proportional zur Schwingungsamplitude des Messrohrs am Ort des Sensors und proportional zur Schwingungsfrequenz.

In einer Weiterbildung der Erfindung modelliert der dichteabhängige Term der Transferfunktion ein Verhältnis von Sensorsignalamplitude und Erregersignalamplitude in Abhängigkeit von der Anregungsfrequenz und der Mediendichte.

In einer Weiterbildung der Erfindung umfasst der dichteabhängige Term der Transferfunktion Summanden, die proportional sind zum Beitrag einzelner Schwingungsmoden zum Sensorsignal, wobei der Beitrag einer Schwingungsmode vom Verhältnis der Anregungsfrequenz zur Eigenfrequenz der Schwingungsmode abhängig ist.

Die Transferfunktion kann dann beispielsweise beschrieben werden als:

$$T(\omega) = j\omega e_s e_d \sum A_i(\omega, \omega_i(\rho)) \qquad \text{(I)}$$

Hierbei sind $e_s$ und $e_d$ Wirksamkeitskoeffizienten des Schwingungssensors bzw. des Erregers. Sie beschreiben also eine Spannung pro Geschwindigkeit bzw. eine Kraft pro Strom.

Die modalen Beiträge $A_i(\omega, \omega_i(\rho))$ können beschrieben werden als:

$$A_i(\omega, \omega_i(\rho)) = \frac{n_i}{1 + j\frac{\omega}{\omega_i(\rho)Q_i} - \left(\frac{\omega}{\omega_i(\rho)}\right)^2} \qquad \text{(II)}$$

Hierbei sind $\omega_i(\rho)$ die von der Mediendichte $\rho$ abhängige Eigenkreisfrequenz einer Biegeschwingungsmode und $Q_i$ die Güte der jeweiligen Biegeschwingungsmode.

Der Ausdruck $n_i$ bezeichnet eine effektive modale Anregbarkeit der jeweiligen Biegeschwingungsmode, wobei, wie hier dargestellt, der dichteabhängige Term der Transferfunktion gemäß einer Weiterbildung der Erfindung die Beiträge einzelner Schwingungsmoden zum Sensorsignal als proportional zu der effektiven modalen Anregbarkeit modelliert.

Die effektive modale Anregbarkeit ist insbesondere proportional zu einem Quotienten des Produkts einer normierten modalen Schwingungsamplitude am Ort des Erregers mit einer normierten modalen Schwingungsamplitude am Ort des Sensors geteilt durch eine modale Steifigkeit des Messrohrs. Die Normierung der modalen Schwingungsamplituden kann beispielsweise so erfolgen, dass das Integral einer modalen Schwingungsamplitude entlang des Messrohrs jeweils den Wert 1 annimmt.

In einer Weiterbildung der Erfindung setzt der dichteabhängige Term der Transferfunktion die modalen Anregbarkeiten zweier Schwingungsmoden durch einen modenspezifischen Proportionalitätsfaktor $\gamma$ zueinander in Beziehung.

In einer Weiterbildung der Erfindung modelliert der dichteabhängige Term der Transferfunktion die Beiträge einzelner Schwingungsmoden zum Sensorsignal jeweils als dämpfungsfrei.

In einer Weiterbildung der Erfindung modelliert der dichteabhängige Term der Transferfunktion die Eigenfrequenzen der Schwingungsmoden als zueinander proportional.

In einer Weiterbildung der Erfindung modelliert der dichteabhängige Term der Transferfunktion einen modenspezifischen Proportionalitätsfaktor zwischen den Eigenfrequenzen zweier Schwingungsmoden als eine Funktion f(p) des Dichtemesswerts.

Berücksichtigt man weiterhin, dass die Erregerkreisfrequenz $\omega$ sich um einen konstanten Faktor $\mu$ von der Eigenkreisfrequenz $\omega_1$ einer Biegeschwingungsnutzmode unterscheidet, wobei beispielsweise gilt $1{,}05 < \mu < 1{,}5$ so können die modalen Beiträge $A_i$ beschrieben werden als:

$$A_i(\mu,\rho) = \frac{n_1}{1-\mu^2}\ \gamma_i\ \frac{1-\mu^2}{1-\left(\frac{\mu}{f_i(\rho)}\right)^2} \qquad (III)$$

In einer Weiterbildung der Erfindung ist die Funktion eine lineare Funktion des Dichtemesswerts, also beispielsweise:

$$f_i(\rho) = a_i + b_i \cdot \left(\rho - \rho_{ref}\right) \qquad (IV)$$

Hierbei sind $a_i$ und $b_i$ modenspezifische Koeffizienten, und $\rho_{ref}$ eine Referenzdichte, beispielsweise $1000\ kg/m^3$.

Mit der folgenden Definition

$$B_i(\mu,\rho) = \frac{1-\mu^2}{1-\left(\frac{\mu}{f_i(\rho)}\right)^2} \qquad (V)$$

kann die Transferfunktion geschrieben werden als:

$$T(\omega_1,\mu,\rho) = \frac{U(\omega_1\mu)}{I(\omega_1\mu)} = j\omega_1\mu e_s e_d \frac{n_1}{1-\mu^2} \sum \gamma_i B_i(\mu,\rho) \qquad (VI)$$

Eine bezüglich einer Dichteabhängigkeit bereinigte Integritätsfunktion HBSI kann damit definiert werden als:

$$HBSI = e_s e_d n_1 2\pi = \left(\sum \gamma_i B_i(\mu,\rho)\right)^{-1} \frac{U}{I} \frac{1-\mu^2}{\mu f_1} \qquad (VII)$$

Dieser Ausdruck beschreibt ein Produkt aus Sensorempfindlichkeit $e_s$, Erregereffektivität $e_d$ und modaler Nachgiebigkeit $n_1$ der Biegeschwingungsnutzmode. Werte für die Integritätsfunktion sind bei Kenntnis der Proportionalitätsfaktoren $\gamma_i$ und der $B_i$ durch Erfassen von Werten der Transferfunktion U/I einfach zu bestimmen.

Eine vereinfachte Variante einer Integritätsfunktion $HBSI_{raw}$ ist gegeben als

$$HBSI_{raw}(\rho) = \frac{U}{I} \frac{1-\mu^2}{\mu f_1} \qquad (VIII)$$

Werte für HBSI$_{raw}$ ergeben sich unmittelbar nach dem Erfassen von Werten für die Transferfunktion U/I.

Die vereinfachte Integritätsfunktion HBSI$_{raw}$ weist eine Dichteabhängigkeit auf, wie sich aus dem Vergleich der Definitionen in Gleichungen (VII) und (VIII) ergibt. Demnach gilt:

$$HBSI_{raw}(\rho) = HBSI \cdot \sum \gamma_i B_i(\mu, \rho) \qquad (IX)$$

Um dennoch mit der vereinfachten Integritätsfunktion HBSI$_{raw}$ eine verlässliche Überwachung durchführen zu können, ist eine Rückführung von bei beliebigen Dichten $\rho$ gewonnenen Werten der vereinfachten Integritätsfunkton auf die entsprechenden Werte unter Referenzdichte $\rho_{ref}$ erforderlich. Dazu kann eine Korrekturfunktion $f_{dens}(\rho)$ definiert werden, für die gilt:

$$f_{dens}(\rho) = \frac{HBSI_{raw}(\rho_{ref})}{HBSI_{raw}(\rho)} = \frac{\sum \gamma_i B_i(\mu, \rho_{ref})}{\sum \gamma_i B_i(\mu, \rho)} \qquad (X)$$

Mit dieser Korrekturfunktion $f_{dens}(\rho)$ kann die vereinfachte Integritätsfunktion zur Vergleichbarkeit auf Referenzbedingungen zurückgeführt werden gemäß:

$$HBSI_{raw}(\rho_{ref}) = f_{dens}(\rho) \, HBSI_{raw}(\rho) \qquad (XI)$$

In einer Weiterbildung der Erfindung modelliert die Transferfunktion neben dem Beitrag der Biegeschwingungsnutzmode den Beitrag nur einer weiteren Schwingungsmode zum Sensorsignal. In diesem Fall kann die Transferfunktion geschrieben werden als:

$$T(\omega_1, \mu, \rho) = j\omega_1 \mu e_s e_d \frac{n_1}{1-\mu^2} \left( 1 + \gamma \frac{1-\mu^2}{1-\left(\frac{\mu}{f(\rho)}\right)^2} \right) \qquad (XII)$$

Mit einer linearen Funktion für f(p) gemäß Gleichung (IV) wird daraus:

$$T(\omega_1, \mu, \rho) = j\omega_1 \mu e_s e_d \frac{n_1}{1-\mu^2} \left( 1 + \gamma \frac{1-\mu^2}{1-\left(\frac{\mu}{\alpha+\beta(\rho-\rho_{ref})}\right)^2} \right) \qquad (XIII)$$

Eine entsprechende dichteunabhängige Integritätsfunktion kann beispielsweise geschrieben werden als:

$$HBSI = \frac{1}{1+\gamma \frac{1-\mu^2}{1-\left(\frac{\mu}{\alpha+\beta(\rho-\rho_{ref})}\right)^2}} \frac{U}{I} \frac{1-\mu^2}{\mu f_1} \qquad (XIV)$$

Mit der folgenden Definition einer Funktion C(p)

$$C(\rho) = \frac{1-\mu^2}{1-\left(\frac{\mu}{\alpha+\beta(\rho-\rho_{ref})}\right)^2} \qquad (XV)$$

wird daraus:

$$HBSI = \frac{1}{1+\gamma\,C(\rho)}\,\frac{U}{I}\,\frac{1-\mu^2}{\mu f_1} \qquad \text{(XVI)}$$

In dieser Ausgestaltung ist für die Implementierung des erfindungsgemäßen Verfahrens lediglich die Bestimmung dreier Parameter, nämlich die Koeffizienten der linearen Funktion der Dichteabhängigkeit $\alpha$, $\beta$ und der Koeffizient der Anregbarkeit $\gamma$ erforderlich.

Gemäß einer Weiterbildung der Erfindung werden die Koeffizienten der linearen Funktion der Dichteabhängigkeit $\alpha$, $\beta$ und der Koeffizient der Anregbarkeit $\gamma$ typspezifisch ermittelt und in Datenspeichern der Mess- und Betriebsschaltung von erfindungsgemäßen Coriolis-Massedurchflussmessgeräten bereitgestellt, wobei der Koeffizient der Anregbarkeit $\gamma$ vorzugsweise für jedes Exemplar eines Coriolis-Massedurchflussmessgeräts vorzugsweise bei einer initialen, insbesondere werkseitigen Bestimmung von Geräteparametern eine individuelle Anpassung erfährt.

Eine entsprechende Korrekturfunktion $f_{dens}(\rho)$ für die vereinfachte Integritätsfunktion $HBSI_{raw}$ kann im Falle der Transferfunktion gemäß Gleichung (XIII) geschrieben werden als:

$$f_{dens}(\rho) = \frac{1+\gamma\,C(\rho_{ref})}{1+\gamma\,C(\rho)} \qquad \text{(XVII)}$$

Durch Multiplikation eines gemessenen Werts der vereinfachten Integritätsfunktion $HBSI_{raw}(\rho)$ mit der Korrekturfunktion $f_{dens}(\rho)$ wird das Messergebnis gemäß einer Weiterbildung der Erfindung auf den Wert der vereinfachten Integritätsfunktion bei Referenzbedingungen $HBSI_{raw}(\rho_{ref})$ zurückgeführt.

Sofern sich der Wert der Integritätsfunktion HBSI oder der vereinfachten Integritätsfunktion bei Referenzbedingungen $HBSI_{raw}(\rho_{ref})$ über einen Toleranzwert ändert, ist dies ein Indiz für eine Veränderung einer modalen Steifigkeit eines Messrohrs, einer Sensorempfindlichkeit oder einer Erregereffektivität. Gemäß einer Weiterbildung der Erfindung wird in diesem Fall eine entsprechende Fehlermeldung ausgegeben. Es ist bekannt, dass die hier genannten Größen Querempfindlichkeiten zur Temperatur aufweisen. Gemäß einer Weiterbildung der Erfindung werden diese Querempfindlichkeiten berücksichtigt, um einen temperaturunabhängigen Wert der Integritätsfunktion HBSI bzw. der vereinfachten Integritätsfunktion $HBSI_{raw}$ anzugeben.

Das erfindungsgemäße Coriolis-Massedurchflussmessgerät umfasst: mindestens ein schwingfähiges Messrohr zum Führen eines Mediums; mindestens einen Erreger zum Anregen von Biegeschwingungen des Messrohrs in Abhängigkeit von einem Erregersignal; mindestens einen Schwingungssensor zum Erfassen der Biegeschwingungen des mindestens einen Messrohrs und zum Ausgeben von einem schwingungsabhängigen Sensorsignal; und mindestens eine Mess- und Betriebsschaltung zum Speisen des Erregers mit einem Erregersignal und zum Erfassen des Sensorsignals, wobei die Mess- und Betriebsschaltung dazu eingerichtet ist, das erfindungsgemäße Verfahren durchzuführen.

Die Erfindung wird nun anhand der in den Zeichnungen dargestellten Ausführungsbeispiele näher erläutert. Es zeigt:

Fig. 1a: eine Seitenansicht eines Ausführungsbeispiels eines erfindungsgemäßen Coriolis-Massedurchflussmessgerätes;

Fig. 1b: eine räumliche Darstellung des Ausführungsbeispiels des erfindungsgemäßen Coriolis-Massedurchflussmessgerätes aus Fig. 1a; und

Fig. 2: ein Flussdiagramm eines Ausführungsbeispiels eines erfindungsgemäßen Verfahrens;

Fig. 3a: ein Diagramm mit Werten der dichteabhängigen vereinfachten Integritätsfunktion $HBSI_{raw}(\rho)$:

Fig. 3b: ein Diagramm mit dichteabhängigen Korrekturfunktionen $f_{dens}(\rho)$, deren Koeffizienten anhand der Werte der dichteabhängigen vereinfachten Integritätsfunktion $HBSI_{raw}(\rho)$ in Fig. 3a bestimmt wurden; und

Fig. 3c: ein Diagramm mit dichteabhängigen Funktionen deren Koeffizienten anhand der Werte der dichteabhängigen vereinfachten Integritätsfunktion $HBSI_{raw}(\rho)$ in Fig. 3a bestimmt wurden, und die dazu dienen, Werte der dichteabhängigen vereinfachten Integritätsfunktion $HBSI_{raw}(\rho)$ auf Werte der dichteunabhängigen Integritätsfunktion HBSI zurückzuführen.

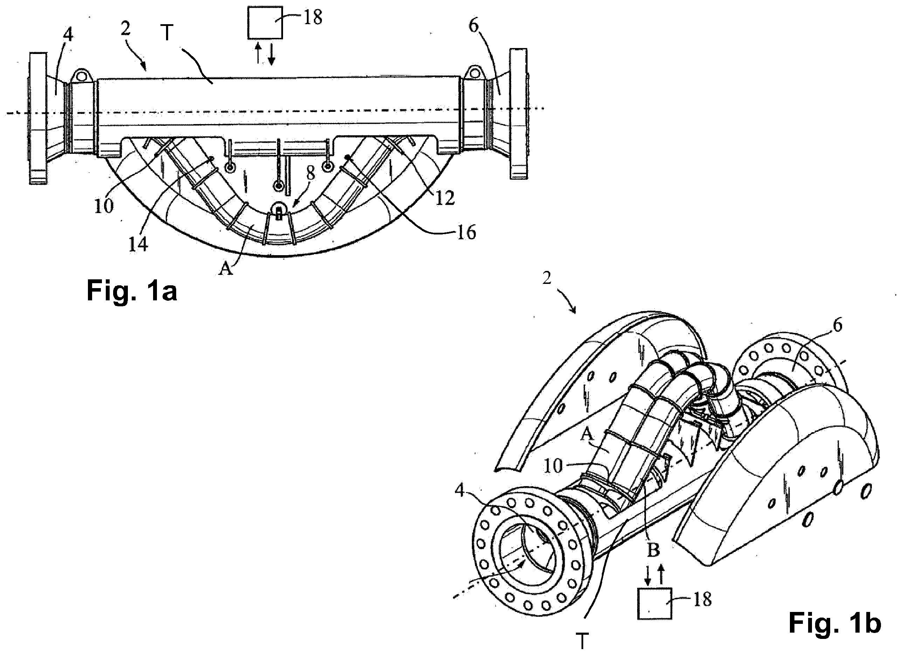

In den Figuren 1a und 1b ist ein Ausführungsbeispiel eines erfindungsgemäßen Coriolis-Massedurchflussmessgeräts 2 dargestellt, welches zur Durchführung des erfindungsgemäßen Verfahrens eingerichtet ist. Das Coriolis-Massedurchflussmessgerät 2 weist zwei schwingfähig gehalterte Messrohre A und B auf, die jeweils bogenförmig ausgebildet sind und parallel zueinander verlaufen. Das Coriolis-Massedurchflussmessgerät 2 ist derart in eine Rohrleitung einsetzbar, dass die beiden Messrohre A, B von dem in der Rohrleitung strömenden Fluid durchströmt werden. Einlassseitig und auslassseitig sind die Messrohre A, B jeweils in Strömungsteilern bzw. -sammlern 4, 6 gefasst, wobei letztere durch ein Trägerrohr T starr miteinander verbunden sind. Damit sind auch die einlassseitigen und auslassseitigen Endabschnitte der Messrohre mit dem Trägerrohr T gekoppelt, wodurch Relativbewegungen zwischen den einlassseitigen und auslassseitigen Endabschnitten der Messrohre wirksam unterdrückt sind. Zwischen den beiden Messrohren A, B ist ein elektrodynamischer Erreger 8 angeordnet, durch welchen die beiden Messrohre A, B zu Biegeschwingungen gegeneinander anregbar sind, wobei eine freie Schwingungslänge der Messrohre A, B durch Koppelelemente 10, 11 festgelegt ist, mit denen die Messrohre einlassseitig und auslassseitig mechanisch gekoppelt sind. Zwischen den beiden Messrohren A, B sind jeweils an einem einlassseitigen und an einem auslassseitigen Abschnitt elektrodynamische Schwingungssensoren 14, 16 angeordnet. Wenngleich Fign. 1a und 1b ein Ausführungsbeispiel eines Coriolis-Massedurchflussmessgeräts mit einem Paar in der Ruhelage gebogenen Messrohren zeigen, betrifft die Erfindung gleichermaßen Coriolis-Massedurchflussmessgeräte mit einem einzigen Messrohr oder mit mehreren Paaren von Messrohren. Gleichermaßen können anstelle der dargestellten, in der Ruhelage gebogenen Messrohre mit einer Spiegelsymmetrie bezüglich einer Messrohrquerebene auch S-förmige Messrohre oder gerade Messrohre zur Realisierung der Erfindung zum Einsatz kommen.

Das Coriolis-Massedurchflussmessgerät 2 umfasst weiterhin eine Betriebs- und Auswerteschaltung 18 zum Speisen des Erregers 8 mit einem Erregerstrom und zum Erfassen und Auswerten von Messsignalen der elektrodynamischen Schwingungssensoren 14, 16. Die Mess- und Betriebsschaltung ist insbesondere dazu eingerichtet, das erfindungsgemäße Verfahren zum Überwachen des Coriolis Massedurchflussmessgerätes durchzuführen. Dies umfasst das Bestimmen von Werten einer Integritätsfunktion, um Veränderungen am Coriolis-Massedurchflussmessgerät frühzeitig erkennen zu können.

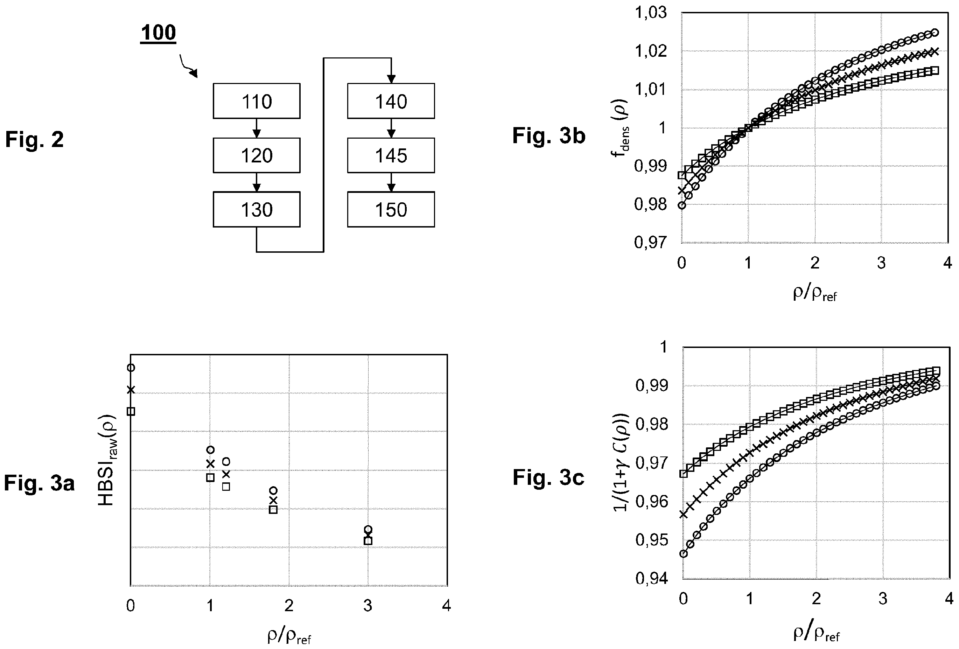

Ein Ausführungsbeispiel des erfindungsgemäßen Verfahrens wird nun anhand von Fig. 2 erläutert.

Das Verfahren 100 beginnt mit dem Ermitteln 110 einer Resonanzfrequenz $f_1$ einer Biegeschwingungsnutzmode des Coriolis-Massedurchflussmessgeräts. Diese kann bei dem in Fign. 1a und 1b gezeigten Gerät insbesondere die so genannte $f_1$-Mode sein, in welcher die beiden Messrohre gegenphasig zueinander ohne Schwingungsknoten zwischen den Koppelelementen schwingen. Basierend auf dieser Resonanzfrequenz $f_1$ erfolgt in einem zweiten Schritt 120 das Bestimmen eines Dichtemesswerts für das in den Messrohren geführte Medium.

Zum Ermitteln der Integritätsfunktion erfolgt das Anregen 130 der Biegeschwingungsnutzmode außer Resonanz beim $\mu$-Fachen der Resonanzfrequenz mit einem Erregerstrom, der eine Erregerstromamplitude I aufweist, wobei $\mu$ insbesondere den Wert 1,2 annimmt.

Es erfolgt das Erfassen 140 eines Sensorsignals und Ermitteln 145 einer Sensorsignalamplitude U der Biegeschwingung außer Resonanz.

Auf Basis der Sensorsignalamplitude U und der Erregerstromamplitude I erfolgt dann das Ermitteln 150 eines Werts einer Integritätsfunktion. Dies kann beispielsweise ein Wert einer Integritätsfunktion HBSI sein oder ein auf eine Referenzdichte zurückgeführter Wert einer vereinfachten Integritätsfunktion $HBSI_{raw}(\rho_{ref})$, wobei die Referenzdichte $\rho_{ref}$ insbesondere die Dichte von Wasser ist.

Wie eingangs dargelegt, gilt für die Integritätsfunktion HBSI gemäß Gleichungen (XV) und (XVI):

$$HBSI = \frac{U}{I} \frac{1 - \mu^2}{\mu f_1} \frac{1}{1 + \gamma\, C(\rho)}$$

mit:

$$C(\rho) = \frac{1 - \mu^2}{1 - \left(\dfrac{\mu}{\alpha + \beta(\rho - \rho_{ref})}\right)^2}$$

Entsprechend gilt für die vereinfachte Integritätsfunktion $HBSI_{raw}(\rho_{ref})$ gemäß gleichungen (VIII), (XI) und XVII):

$$HBSI_{raw}(\rho_{ref}) = \frac{U}{I} \frac{1 - \mu^2}{\mu f_1}\, f_{dens}(\rho)$$

mit:

$$f_{dens}(\rho) = \frac{1 + \gamma\, C(\rho_{ref})}{1 + \gamma\, C(\rho)}$$

Die Implementierung des erfindungsgemäßen Verfahrens für ein gegebenes Coriolis-Massedurchflussmessgerät, erfordert lediglich die Bestimmung dreier Parameter, nämlich die Koeffizienten der linearen Funktion der Dichteabhängigkeit $\alpha$, $\beta$ und der Koeffizient der Anregbarkeit $\gamma$. Hierbei hat sich erwiesen, dass die Koeffizienten der linearen Funktion der Dichteabhängigkeit $\alpha$, $\beta$ für einen Gerätetyp im Wesentlichen konstant sind, und dass lediglich der Koeffizient der Anregbarkeit $\gamma$ eine gewisse Exemplarstreuung aufweist. Insofern ist es in den meisten Fällen ausreichend, die Koeffizienten der linearen Funktion der Dichteabhängigkeit einmal für einen Gerätetyp zu bestimmen und lediglich den Koeffizienten der Anregbarkeit exemplarspezifisch anzupassen. Die Vorgehensweise hierzu wird nun anhand der Fign. 3a bis 3c erläutert.

Bei der Charakterisierung eines insbesondere fabrikneuen Coriolis-Massedurchflussmessgerätes werden dessen Messrohre mit Medien über einen großen Dichtebereich beaufschlagt und beim $\mu$-fachen der Resonanzfrequenz einer Biegeschwingungsnutzmode, insbesondere der $f_1$-Mode schwingen gelassen, um die jeweilige Transferfunktion U/I und damit die Werte der dichteabhängigen vereinfachten Integritätsfunktion $HBSI_{raw}(\rho)$ zu ermitteln.

$$HBSI_{raw}(\rho) = \frac{U}{I}\, \frac{1 - \mu^2}{\mu f_1}$$

Geeignete Medien hierfür sind Wasser als Medium mit einer Referenzdichte $\rho_{ref}$ von etwa 1000 kg/m$^3$, Luft mit einer Dichte $\rho$ von etwa 1,2 kg/m$^3$, höhere Dichten mit bis zu 3100 kg/m$^3$ lassen sich durch Lösungen von Natrium-Polywolframat erzielen.

Fig. 3a zeigt beobachtete Werte von der dichteabhängigen vereinfachten Integritätsfunktion $HBSI_{raw}(\rho)$. Die hier dargestellten Datenpunkte stammen von unterschiedlichen Exemplaren des gleichen Messgerätetyps, wobei gleiche Symbole jeweils Daten von einem Exemplar kennzeichnen.

Fig. 3b zeigt nun exemplarspezifische Korrekturfunktionen $f_{dens}(\rho)$, mit denen Werte von $HBSI_{raw}(\rho)$ auf den Wert von $HBSI_{raw}(\rho_{ref})$ zurückzuführen sind, wobei $f_{dens}(\rho_{ref})$ definitionsgemäß den Wert 1 annimmt und allgemein gilt

Mit:

$$f_{dens}(\rho) = \frac{1 + \gamma\, C(\rho_{ref})}{1 + \gamma\, C(\rho)}$$

und

$$C(\rho) = \frac{1 - \mu^2}{1 - \left( \dfrac{\mu}{\alpha + \beta\left(\rho - \rho_{ref}\right)} \right)^2}$$

werden anhand der Daten in Fig. 3a die unbekannten, exemplarspezifischen Koeffizienten $\alpha$, $\beta$ und $\gamma$ bestimmt, wobei sich zeigt, dass die Koeffizienten $\alpha$, $\beta$ für Exemplare eines Gerätetyps als konstant angenommen werden können. Lediglich der Koeffizient $\gamma$ weist eine Exemplarstreuung auf, so dass er für jedes Exemplar spezifisch zu ermitteln ist.

Mit den zuvor ermittelten Koeffizienten lassen sich auch die Fig. 3c gezeigten exemplarspezifischen Funktionen $1/(1 + \gamma^* C(\rho))$ angeben, mit denen ein gemessener Wert der dichteabhängigen vereinfachten Integritätsfunktion $HBSI_{raw}(\rho)$ auf einen Wert der dichteunabhängigen Integritätsfunktion HBSI zurückzuführen ist gemäß

$$HBSI = HBSI_{raw}(\rho)\, \frac{1}{1 + \gamma\, C(\rho)}$$

**Patentansprüche**

1. Verfahren (100) zum Überwachen eines Coriolis-Massedurchflussmessgerätes mit mindestens einem schwingfähigen Messrohr zum Führen eines Mediums, umfassend:

   Ermitteln (110) einer Resonanzfrequenz einer Biegeschwingungsnutzmode des Coriolis-Massedurchflussmessgeräts;
   Ermitteln (120) eines Dichtemesswerts eines in dem Messrohr geführten Mediums in Abhängigkeit von der Resonanzfrequenz;
   Anregen (130) einer Biegeschwingung außer Resonanz mit einem Erregersignal, welches eine Erregersignalamplitude und eine Anregungsfrequenz aufweist, welche das $\mu$-Fache der Resonanzfrequenz der Biegeschwingungsnutzmode beträgt, wobei $\mu$ ein konstanter Faktor ist, wobei gilt $1{,}05 < \mu < 1{,}5$;
   Erfassen (140) eines Sensorsignals und Ermitteln einer Sensorsignalamplitude der Biegeschwingung außer Resonanz;
   Ermitteln (145) eines Werts einer Integritätsfunktion des Messrohrs, welche von einem Verhältnis der Sensorsignalamplitude zur Erregersignalamplitude der Biegeschwingung abhängt,
   **dadurch gekennzeichnet, dass**
   die Integritätsfunktion weiterhin von einem dichteabhängigen Term einer Transferfunktion abhängt,
   wobei der dichteabhängige Term der Transferfunktion Beiträge mehrerer Schwingungsmoden zum Sensorsignal modelliert, wobei die Integritätsfunktion mittels des dichteabhängigen Terms der Transferfunktion auf Referenzbedingungen zurückgeführt wird, und/oder einen Integritätswert angibt, der keine Querempfindlichkeiten zur Mediendichte aufweist.

2. Verfahren (100) nach Anspruch 1, wobei die Transferfunktion ein Verhältnis von Sensorsignalamplitude und Erregersignalamplitude in Abhängigkeit von der Anregungsfrequenz und der Mediendichte modelliert.

3. Verfahren (100) nach Anspruch 1 oder 2, wobei der dichteabhängige Term der Transferfunktion Summanden umfasst, die proportional sind zum Beitrag einzelner Schwingungsmoden zum Sensorsignal, wobei der Beitrag einer Schwingungsmode vom Verhältnis der Anregungsfrequenz zur Eigenfrequenz der Schwingungsmode abhängig ist.

4. Verfahren nach Anspruch 3, wobei der dichteabhängige Term der Transferfunktion die Eigenfrequenzen der Schwingungsmoden als zueinander proportional modelliert.

5. Verfahren nach Anspruch 4, wobei der dichteabhängige Term der Transferfunktion einen modenspezifischen Proportionalitätsfaktor zwischen den Eigenfrequenzen zweier Schwingungsmoden als eine Funktion des Dichtemesswerts modelliert.

6. Verfahren nach Anspruch 5, wobei die Funktion eine lineare Funktion des Dichtemesswerts ist.

7. Verfahren nach einem der vorhergehenden Ansprüche, wobei der dichteabhängige Term der Transferfunktion die Beiträge einzelner Schwingungsmoden zum Sensorsignal jeweils als dämpfungsfrei modelliert.

8. Verfahren nach einem der Ansprüche 3 bis 7, wobei der dichteabhängige Term der Transferfunktion die Beiträge einzelner Schwingungsmoden zum Sensorsignal als proportional zu einer effektiven modalen Anregbarkeit modelliert.

9. Verfahren nach Anspruch 8, wobei der dichteabhängige Term der Transferfunktion die modalen Anregbarkeiten zweier Schwingungsmoden durch einen Proportionalitätsfaktor zueinander in Beziehung setzt.

10. Verfahren nach einem der vorhergehenden Ansprüche, wobei der dichteabhängige Term der Transferfunktion neben dem Beitrag der Biegeschwingungsnutzmode den Beitrag nur einer weiteren Schwingungsmode zum Sensorsignal modelliert.

11. Coriolis-Massedurchflussmessgerät, umfassend:

    mindestens ein schwingfähiges Messrohr zum Führen eines Mediums;
    mindestens einen Erreger zum Anregen von Biegeschwingungen des Messrohrs in Abhängigkeit von einem Erregersignal;

mindestens einen Schwingungssensor zum Erfassen der Biegeschwingungen des mindestens einen Messrohrs und zum Ausgeben von einem schwingungsabhängigen Sensorsignal;

mindestens eine Mess- und Betriebsschaltung zum Speisen des Erregers mit einem Erregersignal und zum Erfassen des Sensorsignals, wobei die Mess- und Betriebsschaltung dazu eingerichtet ist, das Verfahren nach einem der Ansprüche 1 bis 10 durchzuführen.

**Claims**

1. A method (100) for monitoring a Coriolis mass flow meter having at least one vibratable measuring tube for carrying a medium, comprising:

   determining (110) a resonant frequency of a bending vibration useful mode of the Coriolis mass flow meter;
   determining (120) a density measurement value of a medium conducted in the measuring tube as a function of the resonance frequency;
   exciting (130) a flexural vibration out of resonance with an excitation signal which has an excitation signal amplitude and an excitation frequency which is $\mu$ times the resonance frequency of the flexural vibration utilization mode, $\mu$ being a constant factor, where $1.05 < \mu < 1.5$;
   detecting (140) a sensor signal and determining a sensor signal amplitude of the flexural vibration out of resonance;
   determining (145) a value of an integrity function of the measuring tube which depends on a ratio of the sensor signal amplitude to the excitation signal amplitude of the flexural vibration,
   **characterized in that**
   the integrity function further depends on a density-dependent term of a transfer function,
   wherein the density-dependent term of the transfer function models contributions of a plurality of vibration modes to the sensor signal, wherein the integrity function is traced back to reference conditions by means of the density-dependent term of the transfer function, and/or indicates an integrity value which has no cross-sensitivities to the density of the medium.

2. A method (100) according to claim 1, wherein the transfer function models a ratio of sensor signal amplitude and excitation signal amplitude as a function of the excitation frequency and the media density.

3. Method (100) according to claim 1 or 2, wherein the density-dependent term of the transfer function comprises summands that are proportional to the contribution of individual vibration modes to the sensor signal, wherein the contribution of a vibration mode is dependent on the ratio of the excitation frequency to the natural frequency of the vibration mode.

4. Method according to claim 3, wherein the density-dependent term of the transfer function models the natural frequencies of the vibration modes as proportional to one another.

5. Method according to claim 4, wherein the density-dependent term of the transfer function models a mode-specific proportionality factor between the natural frequencies of two vibration modes as a function of the density measurement.

6. A method according to claim 5, wherein the function is a linear function of the density measurement.

7. Method according to one of the preceding claims, wherein the density-dependent term of the transfer function models the contributions of individual vibrational modes to the sensor signal as damping-free in each case.

8. Method according to one of claims 3 to 7, wherein the density-dependent term of the transfer function models the contributions of individual vibrational modes to the sensor signal as being proportional to an effective modal excitatability.

9. Method according to claim 8, wherein the density-dependent term of the transfer function relates the modal excitations of two vibrational modes to one another by means of a proportionality factor.

10. Method according to one of the preceding claims, wherein the density-dependent term of the transfer function models the contribution of only one further vibrational mode to the sensor signal in addition to the contribution of the useful bending vibration mode.

11. Coriolis mass flow meter, comprising:

at least one vibratable measuring tube for conducting a medium;
at least one exciter for exciting bending vibrations of the measuring tube in dependence on an exciter signal;
at least one vibration sensor for detecting the flexural vibrations of the at least one measuring tube and for outputting a vibration-dependent sensor signal;
at least one measuring and operating circuit for supplying the exciter with an excitation signal and for detecting the sensor signal, the measuring and operating circuit being configured to carry out the method according to one of claims 1 to 10.

**Revendications**

1. Procédé (100) de surveillance d'un débitmètre massique de Coriolis ayant au moins un tube de mesure vibrant pour guider un fluide, comprenant :

Détermination (110) d'une fréquence de résonance d'un mode utile de vibration de flexion du débitmètre massique de Coriolis ;
Déterminer (120) une mesure de densité d'un milieu guidé dans le tube de mesure en fonction de la fréquence de résonance ;
exciter (130) une vibration de flexion hors résonance avec un signal d'excitation ayant une amplitude de signal d'excitation et une fréquence d'excitation qui est égale à $\mu$ fois la fréquence de résonance du mode utile de vibration de flexion, où $\mu$ est un facteur constant, avec $1,05 < \mu < 1,5$;
Détecter (140) un signal de capteur et déterminer une amplitude de signal de capteur de la vibration de flexion hors résonance ;
déterminer (145) une valeur d'une fonction d'intégrité du tube de mesure, qui dépend d'un rapport entre l'amplitude du signal de capteur et l'amplitude du signal d'excitation de la vibration de flexion,
**caractérisé en ce que**
la fonction d'intégrité dépend en outre d'un terme dépendant de la densité d'une fonction de transfert,
le terme dépendant de la densité de la fonction de transfert modélisant des contributions de plusieurs modes d'oscillation au signal du capteur, la fonction d'intégrité étant ramenée à des conditions de référence au moyen du terme dépendant de la densité de la fonction de transfert, et/ou indiquant une valeur d'intégrité qui ne présente pas de sensibilités transversales à la densité du milieu.

2. Procédé (100) selon la revendication 1, dans lequel la fonction de transfert modélise un rapport entre l'amplitude du signal du capteur et l'amplitude du signal d'excitation en fonction de la fréquence d'excitation et de la densité du milieu.

3. Procédé (100) selon la revendication 1 ou 2, dans lequel le terme dépendant de la densité de la fonction de transfert comprend des opérandes qui sont proportionnels à la contribution de modes d'oscillation individuels au signal de capteur, la contribution d'un mode d'oscillation dépendant du rapport entre la fréquence d'excitation et la fréquence propre du mode d'oscillation.

4. Procédé selon la revendication 3, dans lequel le terme dépendant de la densité de la fonction de transfert modélise les fréquences propres des modes d'oscillation comme étant proportionnelles entre elles.

5. Procédé selon la revendication 4, dans lequel le terme dépendant de la densité de la fonction de transfert modélise un facteur de proportionnalité spécifique au mode entre les fréquences propres de deux modes de vibration comme une fonction de la mesure de densité.

6. Procédé selon la revendication 5, dans lequel la fonction est une fonction linéaire de la valeur de mesure de la densité.

7. Procédé selon l'une des revendications précédentes, dans lequel le terme dépendant de la densité de la fonction de transfert modélise les contributions des différents modes de vibration au signal du capteur comme étant respectivement sans atténuation.

**8.** Procédé selon l'une des revendications 3 à 7, dans lequel le terme dépendant de la densité de la fonction de transfert modélise les contributions des différents modes de vibration au signal du capteur comme étant proportionnelles à une excitabilité modale effective.

**9.** Procédé selon la revendication 8, dans lequel le terme dépendant de la densité de la fonction de transfert établit une relation entre les excitabilités modales de deux modes de vibration au moyen d'un facteur de proportionnalité.

**10.** Procédé selon l'une des revendications précédentes, dans lequel le terme dépendant de la densité de la fonction de transfert modélise, outre la contribution du mode utile de vibration de flexion, la contribution d'un seul autre mode de vibration au signal du capteur.

**11.** Débitmètre massique de Coriolis, comprenant :

au moins un tube de mesure vibrant pour le guidage d'un fluide ;
au moins un excitateur pour exciter les oscillations de flexion du tube de mesure en fonction d'un signal d'excitation ;
au moins un capteur de vibrations pour détecter les vibrations de flexion du au moins un tube de mesure et pour émettre un signal de capteur dépendant des vibrations ;
au moins un circuit de mesure et de fonctionnement pour alimenter l'excitateur avec un signal d'excitateur et pour détecter le signal de capteur, le circuit de mesure et de fonctionnement étant adapté pour mettre en oeuvre le procédé selon l'une quelconque des revendications 1 à 10.

**Fig. 1b**

**Fig. 1a**

**Fig. 3b**

**Fig. 3c**

**Fig. 2**

**Fig. 3a**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2638367 B1

- WO 2021047887 A1